# EUROPEAN PATENT APPLICATION

(11) **EP 4 632 044 A1**
(43) Date of publication of application: **15.10.2025**
(21) Application number: 24169876.0
(22) Date of filing: 12.04.2024
(51) Int. Cl.: C10G 33/04, B01D 17/04

(54) **ADDITIVE COMPOSITION COMPRISING A MIXTURE OF CARBOXYLIC ACIDS, AT LEAST ONE DEMULSIFIER AND AT LEAST ONE ASPHALTENE INHIBITOR IN PETROLEUM PRODUCT EMULSIONS**

(71) Applicant: TotalEnergies OneTech, 92400 Courbevoie (FR)
(72) Inventor: MONDKAR, Hemant Sunanda Surendra, 69360 SOLAIZE (FR); TORT, FREDERIC, 69360 SOLAIZE (FR); FRETARD, David, 69360 SOLAIZE (FR)
(74) Representative: Casalonga

(57) **Abstract**

The present invention deals with an oil additive composition comprising:
(a) at least one fatty carboxylic acid comprising at least one fatty chain containing at least 8 carbon atoms, and
(b) at least one mono- or polycarboxylic acid comprising at least one hydrocarbon chain containing from 1 to 7 carbon atoms,
(c) at least one asphaltene inhibitor, and
(d) at least one demulsifier.

The instant invention further pertains to the use of such a composition as an additive in an oil production installation and/or in a petroleum product such as a crude oil or any product which results therefrom by any refining and/or extraction process. The additive composition of the invention is especially useful for demulsifying water in a petroleum product emulsion comprising one or more solid particles.

## Description

The present invention deals with an oil additive composition comprising at least a mixture of carboxylic acids as defined hereafter, at least one asphaltene inhibitor and at least one demulsifier.

The instant invention further pertains to the use of such a composition as an additive in an oil production installation and/or in a petroleum product emulsion such as a crude oil emulsion and/or any emulsion product which results therefrom by any refining and/or extraction process. The additive composition of the invention is advantageously useful for demulsifying at least a petroleum product emulsion, especially a crude oil emulsion, such as a water-in-oil or an oil-in-water emulsion, comprising one or more solid particles, especially organic and/or mineral particles.

In addition, the invention aims at providing a petroleum product emulsion comprising such an additive composition and one or more solid particles, as well as a method for demulsifying at least an oil emulsion such as a water-in-oil or an oil-in-water emulsion, comprising one or more solid particles, and a method for decreasing the viscosity of such oil emulsion.

### PRIOR ART AND BACKGROUND OF THE INVENTION

In the oil production process, recovered crude oils often contain water and optionally hydrophilic impurities, which can lead to a myriad of issues, such as the corrosion of oil production installation, mineral scale deposits on the surfaces of oil equipment, especially on artificial lift systems, high-pressure drop in the pipelines, high pumping costs and/or catalysts poisoning in upstream facilities.

Water is mostly present in extracted crude oils under the form of an emulsion, for example as a water-in-oil emulsion or as an oil-in-water emulsion when the water content increases, and its presence can be removed thanks to the implementation of demulsification techniques.

For instance, crude oils emulsions are introduced in a separator at a given temperature and at least a chemical demulsifier, mainly one or more surface-active agents, is injected in said emulsions before entering the separator. Such demulsifier acts at the water-oil interface and allows the water droplets to aggregate and coalesce leading to phase separation. In other words, chemical demulsifiers are commonly used to disrupt the interface between the water and oil phases in crude oils emulsions to separate them into individual phases.

However, in some cases, current available demulsification processes are unable to efficiently separate the water and oil phases into individual phases.

Indeed, crude oils emulsions at well outlets can further contain solid particles, especially organic and/or mineral particles, such as asphaltenes, resins, organic acids, calcium carbonates, calcium ions, silica and/or clay, which accumulate at the water-oil interface and lead to the formation of an interfacial film preventing water droplets from aggregating.

Hence, the presence of said solid particles strongly enhances the stability of the crude oils emulsions. In these conditions, such crude oils emulsions often become highly viscous, dense, and extremely stable, and are consequently tougher to separate into individual phases with conventional demulsification techniques.

Indeed, conventional demulsification processes generally fail to destabilize extracted crude oils stabilized by solid particles sufficiently to separate the water and oil phases properly into individual phases in order to obtain, on the one hand, a good water quality and, on the other hand, a standard oil with a residual amount of water below a targeted content, in particular below 1% by mass, i.e. oil with low BS&W (Basic Sediment and Water) levels.

Several attempts of improving the conventional demulsification processes have therefore already been developed to address this issue, namely by increasing the demulsifier concentration and/or expanding the separation temperature and/or extending the residence time of the emulsions in the separator.

Nevertheless, when implementing such parameters, it is recommended to stop the installation and the oil production to initiate a chemical treatment for cleaning the separator with a solvent and/or a scale dissolver and/or an organic deposit dissolver.

Such a maintenance operation is time-consuming and costly as the production must be halted for a long period of time and the cleaning treatment must be carried out several times, and risks damaging not only the separator but also any part of the oil production installation. Indeed, the oil production installation may be impaired, especially during shutdown, cleaning operations, and/or restarting.

Furthermore, the implementation of large quantity of solvent and/or a scale dissolver and/or an organic deposit dissolver can also raise some environmental issues, such as soil contamination, and underground and surface water pollution in case of spills.

In addition, the use of large quantity of organic solvent can trigger safety issues and health hazards to the operators in industrial production as they are combustible, extremely inflammable and their inhalation can cause a string of serious and various ailments. In other words, these organic solvents may also endanger the safety of the operators.

Moreover, these attempts still fall short of expectations as said demulsification techniques remain unsuccessful to discharge water and recover crude oils with a satisfactory low content of residual water.

Other types of demulsification processes, especially physical demulsification processes, have also been carried out to break crude oils emulsions strongly stabilized by solid particles, such as organic and/or mineral particles.

By way of an illustration of these processes, a sonication has been carried out for treating highly viscous crude oils emulsions stabilized by solid particles. In such a process, at least one chemical demulsifier can be added prior to or during sonication to lower the energy required to break the water-oil interface in the emulsions.

It has also been known to implement gravity settling and centrifugation in conjunction with chemical demulsifiers or to perform electrostatic demulsification in the presence of chemical demulsifiers.

Besides, oxygen-enriched non-ionic demulsifiers have been developed in alternative to conventional chemical demulsifiers to destabilize water in crude oil emulsions.

Such demulsification processes remain costly, time-consuming, and are not as effective as expected. On top of that, another flaw of physical demulsification processes lies in the fact that they are sometimes tedious to implement as they require the additional use of at least one chemical demulsifier.

As a result, it remains a reel need to provide a novel additive that is able to break strong and highly viscous crude oils emulsions that are stabilized by solid particles, such as organic and/or mineral particles, properly into individual phases without suffering the aforementioned drawbacks, specifically without soaring oil production costs and without shutting down the oil installation.

Indeed, one of the goals of the present invention is to provide an additive package that is able to efficiently destabilize crude oils emulsions stabilized by solid particles, such as organic and/or mineral particles, to remove water and recover crude oils with a residual amount of water as low as possible without damaging oil production installation and soaring oil production costs.

Specifically, one of the goals of the present invention is to provide a demulsifier package of additives having a good ecotoxicity profile ensuring safety conditions for the environment and the operators while obtaining oils that meet the quality standards criteria in oil industry.

### OBJECT OF THE INVENTION

The present invention namely results from the unexpected findings, by the inventors, that an oil additive composition comprising at least a mixture of carboxylic acids, as defined below, at least one asphaltene inhibitor and at least one demulsifier, is particularly efficient to break crude oils emulsions that are stabilized by solid particles, especially organic and/or mineral particles, without shutting down the oil installation and/or soaring oil production costs.

Therefore, the present invention relates to an oil additive composition comprising:
(a) at least one fatty carboxylic acid comprising at least one fatty chain containing at least 8 carbon atoms,
(b) at least one mono- or polycarboxylic acid, in particular at least one monocarboxylic acid, comprising at least one hydrocarbon chain containing from 1 to 7 carbon atoms,
(c) at least one asphaltene inhibitor, and
(d) at least one demulsifier.

The composition according to the present invention exhibits the asset of being able to act on the water-oil interface of crude oils emulsions and/or any emulsion products deriving therefrom as well as on the solid particles contained therein, especially on asphaltene and mineral particles like calcium carbonates.

In other words, the composition of the present invention is not only able to properly discharge water and recover oils with a low residual amount of water but is also effective against asphaltene and/or solid fouling, such as scale deposits, for example prompted by calcium carbonates.

In still other words, the composition of the present invention allows to break emulsions stabilized by one or more solid particles that form during extraction and/or refinement and/or any other way of crude petroleum products, and to reduce the content of these solid particles.

It ensures from these assets that said composition can be implemented for multipronged purposes.

Hence, said composition is therefore particularly advantageous to break crude oils emulsions and/or any emulsion products deriving therefrom that are stabilized by one or more solid particles into individual phases while achieving good water quality and oils with a residual amount of water as low as possible, especially below the standards required in the oil industry, for instance a residual amount of water less than 1% by mass, relative to the total weight of the oil.

Specifically, said composition displays the advantage of improving the separation of water and crude oil by accelerating separation kinetics, in comparison with chemical demulsifiers used alone.

In other words, the composition of the present invention exhibits the asset of prompting faster kinetics of separation of water and oil phases.

In still other words, the composition of the present invention enables to break quickly and efficiently highly stable emulsions so as to achieve an efficient separation of water and oil.

It bespeaks that the composition of the present invention allows to obtain a better water-oil interface in crude oils emulsions stabilized by solid particles, especially organic and/or mineral particles.

Furthermore, the composition of the present invention is particularly advantageous as it does not require the additional implementation of a physical demulsification technique to break high viscous and stable crude oils emulsions and/or any products deriving therefrom, which eases its use in an oil production process.

The composition according to the present invention allows to prevent the current issues that plagued oil installation production and/or oil equipment processing crude oils emulsions containing undesirable amounts of water.

It further bespeaks that the use of the composition according to the present invention makes it possible to enhance the lifetime of the oil production installation and curb the oil production costs.

Thus, said composition helps to improve oil productivity of an oil production installation.

The composition according to the invention further displays a good ecotoxicity profile ensuring safety conditions for the environment, specifically to the marine environment.

Indeed, said composition advantageously encompasses bio-based compounds, especially vegetable-based compounds.

Another subject-matter of the present invention relies on the use of said composition as an additive in a petroleum product emulsion.

Preferably, the subject-matter of the present invention pertains to the use of said composition as an additive in a petroleum product emulsion, such as a crude oil emulsion and/or any emulsion product which results therefrom by any refining and/or extraction process, preferably for treating a petroleum product emulsion, such as a crude oil emulsion, comprising one or more solid particles, especially for demulsifying water in said petroleum product emulsion.

The instant invention also aims at the use of said composition for decreasing the viscosity of petroleum product emulsion, such as a crude oil emulsion and/or any emulsion product which results therefrom by any refining and/or extraction process, comprising one or more solid particles.

The instant invention further pertains to a petroleum product emulsion comprising such an additive composition and one or more solid particles.

A further subject-matter of the present invention deals with a method for demulsifying water in a petroleum product emulsion, such as a crude oil emulsion, comprising one or more solid particles, such as organic and/or mineral particles, especially organic and mineral particles.

As previously outlined, the implementation of the composition of the invention enhances the separation of the water and oil phases into individual phases.

Furthermore, the present invention deals with a method for decreasing the viscosity of a petroleum product emulsion, such as a crude oil emulsion, comprising one or more solid particles, such as organic and/or mineral particles, especially organic and mineral particles.

Other objects, features, aspects and advantages of the invention will become more apparent upon reading the following description and examples.

In the following, and at least one other indication, the limits of a value range are included within this range, particularly in the expressions "between" and "ranging from ... to ...".

Moreover, the expressions "at least one" and "at least" used in the present description are respectively equivalent to the expressions "one or more" and "more than or equal to".

Finally, in a manner known per se, Cₙ compound or group designates a compound or a group containing in its chemical structure n carbon atoms.

### DETAILED DESCRIPTION

### Additive composition

As previously defined, the oil additive composition comprises:
(a) at least one fatty carboxylic acid comprising at least one fatty chain containing at least 8 carbon atoms, and
(b) at least one mono- or polycarboxylic acid comprising at least one hydrocarbon chain containing from 1 to 7 carbon atoms,
(c) at least one asphaltene inhibitor, and
(d) at least one demulsifier.

The fatty chain of the carboxylic acid (a) may contain from 8 to 30 carbon atoms, preferably from 12 to 24 carbon atoms, more preferably from 12 to 20 carbon atoms, even more preferably from 14 to 20 carbon atoms.

The fatty carboxylic acid (a) may be chosen among the group consisting of the compounds having the formula Ri-C(O)OH wherein R₁ denotes a hydrocarbon group containing at least 8 carbon atoms.

The fatty carboxylic acid (a) may be chosen among the group consisting of the compounds having the formula Ri-C(O)OH wherein R₁ represents a linear or branched, saturated or unsaturated, alkyl group comprising at least 8 carbon atoms, preferably from 8 to 30 carbon atoms, more preferably from 12 to 24 carbon atoms, especially from 12 to 20 carbon atoms and specifically from 14 to 20 carbon atoms.

Preferably, the fatty carboxylic acid (a) is chosen among the group consisting of the compounds having the formula Ri-C(O)OH wherein R₁ represents a linear, saturated or unsaturated, alkyl group comprising at least 8 carbon atoms, preferably from 8 to 30 carbon atoms, more preferably from 12 to 24 carbon atoms, especially from 12 to 20 carbon atoms and specifically from 14 to 20 carbon atoms.

More preferably, the fatty carboxylic acid (a) is chosen among the group consisting of the compounds having the formula Ri-C(O)OH wherein R₁ represents a linear, saturated or unsaturated, alkyl group comprising from 12 to 24 carbon atoms, especially from 12 to 20 carbon atoms and specifically from 14 to 20 carbon atoms.

Even more preferably, the fatty carboxylic acid (a) is chosen among the group consisting of the compounds having the formula R₁-C(O)OH wherein R₁ represents a linear and unsaturated alkyl group comprising from 12 to 24 carbon atoms, especially from 12 to 20 carbon atoms and specifically from 14 to 20 carbon atoms.

The fatty carboxylic acid (a) is preferably a liquid fatty carboxylic acid.

For the purposes of the present invention, the term "liquid fatty acid" means a fatty carboxylic acid having a melting point below or equal to 25°C, preferably below or equal to 20°C at atmospheric pressure (1.013×10⁵ Pa).

The fatty carboxylic acid (a) may be chosen among the group consisting of oleic acid, linoleic acid, arachidonic acid, isostearic acid, isopalmitic acid, ricinoleic acid, and mixtures thereof, preferably oleic acid ricinoleic acid and mixtures thereof.

The fatty carboxylic acid (a) is advantageously from natural origin, preferably based on bio-based fatty carboxylic acids.

The fatty carboxylic acid (a) is especially chosen from plant-based fatty carboxylic acids.

As previously defined, the mono- or polycarboxylic acid (b) comprises at least one hydrocarbon group containing from 1 to 7 carbon atoms.

Preferably, the mono- or polycarboxylic acid (b) comprises at least one hydrocarbon group containing from 1 to 5 carbon atoms, especially from 1 to 4 carbon atoms.

According to the present invention, the mono- or polycarboxylic acid (b) may be chosen from monocarboxylic acids, polycarboxylic acids, and mixtures thereof.

Preferably, the mono- or polycarboxylic acid (b) may be chosen among mono- or dicarboxylic acids, preferably from the group consisting of monocarboxylic acids.

The monocarboxylic acid (b) may be chosen among the group consisting of the compounds having the formula R₂-C(O)OH wherein R₂ represents a linear or branched, saturated or unsaturated, alkyl group comprising from 1 to 6 carbon atoms, preferably from 1 to 5 carbon atoms, more preferably from 1 to 3 carbon atoms.

The monocarboxylic acid (b) is preferably chosen among the group consisting of propionic acid, acetic acid, or mixture thereof, especially propionic acid.

The dicarboxylic acid (b) may be chosen among the group consisting of the compounds having the formula HO(O)C-R'₂-C(O)OH wherein R'₂ represents a linear or branched, saturated or unsaturated, alkylene group comprising from 1 to 5 carbon atoms, preferably from 1 to 4 carbon atoms, more preferably from 1 to 2 carbon atoms or a covalent bond between the two carboxylic groups (-C(O)OH).

The dicarboxylic acid (b) is preferably chosen among the group consisting of propanedioic acid, pentanedioic acid, butanedioic acid, ethanedioic acid, or mixture thereof, especially chosen among the group consisting of propanedioic acid, ethanedioic acid, or mixture thereof.

The mono- or polycarboxylic acid (b) may preferably be chosen among the group consisting of propionic acid, acetic acid, propanedioic acid, pentanedioic acid, butanedioic acid, ethanedioic acid, or mixture thereof, especially chosen among the group consisting of propionic acid, acetic acid, or mixture thereof, specifically propionic acid.

The composition according to the present invention may comprise said fatty carboxylic acid (a) and mono- or polycarboxylic acid (b) in a ratio by mass (a):(b) ranging from more than 50:50 to 95:5, preferably from 60:40 to 90:10, more preferably from 70:30 to 85:15, even more preferably is in a ratio of 80:20.

The composition according to the present invention may preferably comprise said fatty carboxylic acid (a) and monocarboxylic acid (b) in a ratio by mass (a):(b) ranging from more than 50:50 to 95:5, preferably from 60:40 to 90:10, more preferably from 70:30 to 85:15, even more preferably is in a ratio of 80:20.

As previously outlined, the composition according to the present invention further comprises (c) at least one asphaltene inhibitor.

The asphaltene inhibitor may be chosen from the group consisting of alkylphenol formaldehyde resins, modified alkylphenol aldehyde resins and mixtures thereof.

Alkyl phenol may be from fossil origin or renewable origin (cardanol for example).

Preferably, the asphaltene inhibitor comprises at least one modified alkylphenol-aldehyde resin capable of being obtained by a Mannich reaction of an alkylphenol-aldehyde condensation resin with:
- at least one aldehyde and/or ketone having from 1 to 8 carbon atoms, preferably from 1 to 4 carbon atoms,
- and at least one hydrocarbon compound having at least one alkylamine group (alkylmonoamine or alkylpolyamine) having between 1 to 30 carbon atoms, preferably between 4 and 30 carbon atoms,
   the said alkylphenol-aldehyde condensation resin being itself capable to be obtained by condensation of:
   - at least one alkylphenol substituted by at least one linear or branched alkyl group having from 1 to 30 carbon atoms with
   - at least one aldehyde and/or ketone having from 1 to 8 carbon atoms, preferably from 1 to 4 carbon atoms.

Such modified alkyphenol-aldehyde resins are for example disclosed in the patent application WO2016/162392.

According to a particular embodiment, the asphaltene inhibitor may comprise a resin obtainable by condensation of a phenol compound or derivative thereof with at least one aldehyde having from 1 to 8 carbon atoms.

More particularly, the asphaltene inhibitor may comprise at least one resin obtainable by condensation of at least one phenol substituted by a hydrocarbon group having from 12 to 24 carbon atoms with at least one aldehyde having from 1 to 8 carbon atoms. Such alkylphenol formaldehyde resins are different from alkylphenol-aldehyde resins obtainable by a Mannich reaction as described hereabove.

Said phenol is preferably substituted in meta position, and more preferably corresponds to formula (I) below: 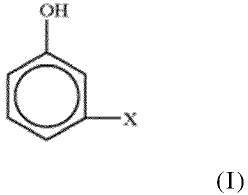 wherein X denotes a linear of branched, saturated on unsaturated hydrocarbon group containing from 12 to 24 carbon atoms, preferably from 12 to 18 carbon atoms and more preferably from 14 to 16 carbon atoms. Most preferably, X denotes an alkyl or alkenyl group.

A particularly preferred compound is cardanol, which is a compound of formula (I) wherein X denote an alkenyl group with an average number of 15 carbon atoms and 1 to 3 double bonds.

Cardanol can be obtained in a known manner from an oil that is itself obtained from the shell of cashew kernels also known as cashew nutshell liquid.

The aldehyde used for obtaining said resin preferably contains from 1 to 4 carbon atoms. Said aldehyde is preferably chosen from formaldehyde, acetaldehyde, propionaldehyde, butyraldehyde, 2-ethylhexanal, benzaldehyde and mixtures thereof, and more preferably from formaldehyde.

According to a particular embodiment, the composition according to the present invention may further comprise (c) at least one cardanol-formaldehyde resin.

The composition according to the present invention may comprise said mixture of carboxylic acids (a) + (b) and said at least one asphaltene inhibitor (c) in a ratio by mass (a)+(b):(c) ranging from 50:50 to 95:5, more preferably from 50:50 to 90:10, even more preferably from 50:50 to 80:20.

The composition according to the present invention advantageously comprises said mixture of carboxylic acids (a) + (b) and said at least one asphaltene inhibitor (c) in a ratio by mass (a)+(b):(c) at 75:25.

As previously outlined, the composition according to the present invention further comprises (d) at least one demulsifier.

The demulsifier may for example be chosen from the group consisting of:
- Polyalkoxylated block copolymer and ester derivatives,
- Alkylphenol - Aldehyde Resin Alkoxylates,
- Polyalkoxylates of polyol or glycidyl ethers,
- Polyurethanes (carbamates) and polyalkoxylate derivatives,
- Hyperbranched polymers,
- Vinyl polymers,
- Polysilicones;
   and mixtures thereof.

Preferably, the composition comprises a demulsifier corresponding to a blend of alkoxylated alkylphenol resins, alkoxylated amine, ethylene oxide/propylene oxide (EO/PO) copolymers.

Said demulsifier can be brought in hydrocarbon solvent(s), for example in an aromatic solvent.

Advantageously, the composition according to the present invention comprises said at least one demulsifier (d) and said mixture of carboxylic acids and said at least one asphaltene inhibitor (a) + (b) + (c) are present in a ratio by masse (d): (a)+(b)+(c) ranging from 10:90 to 90:10, more particulier from 20:80 to 80:20.

The composition according to the present invention may further contain at least one additive, different from the mixture of carboxylic acids (a) and (b), the asphaltene inhibitor (c) and the demulsifier (d) as previously defined.

According to a preferred embodiment, the additive composition of the present invention further contains one or more liquid organic solvent(s). By liquid, it is meant a solvent which is in liquid form at ambient temperature (20°C) and atmospheric pressure (1,013.10⁵ Pa).

Such solvents may in particular be chosen from poly alkyl ethers, aliphatic hydrocarbons such as alkanes, aromatic solvents such as aromatic hydrocarbons and aromatic hetero-compounds, and mixtures thereof.

Preferred organic solvents are chosen from aromatic solvents, such as N-methylpyrrolidone, xylene, toluene, benzene; and poly alkyl ethers such as butyl carbitol (diethylene glycol monobutyl ether); as well as mixtures thereof.

Other preferred organic solvents include those derived from biomass, such as oils of vegetable origin. A particularly preferred solvent is cashew nutshell liquid, also known as CSNL, which is a widely available vegetable oil derived from cashew nutshell. CNSL can be used as a mixture with any other solvent such as those described herein.

Preferably, the additive composition comprises one or more organic solvent chosen among the group consisting of oils of vegetable origin, especially cashew nutshell liquid.

The composition of the invention may contain an amount of solvent ranging from 5 to 80% by weight, preferably from 5 to 40% by weight, more preferably from 10 to 25% by weight, relative to the total weight of the composition.

Advantageously, the composition according to the present invention comprises:
(a) at least one fatty carboxylic acid comprising at least one fatty chain containing at least 8 carbon atoms,
(b) at least one monocarboxylic acid comprising at least one hydrocarbon chain containing from 1 to 7 carbon atoms,
(c) at least one asphaltene inhibitor, and
(d) at least one demulsifier.

Preferably, the composition according to the present invention comprises:
(a) at least one fatty carboxylic acid having the formula R₁-C(O)OH wherein R₁ denotes a hydrocarbon group containing from 12 to 24 carbon atoms, more preferably from 12 to 20 carbon atoms, even more preferably from 14 to 20 carbon atoms,
(b) at least one monocarboxylic acid having the formula R₂-C(O)OH wherein R₂ represents a linear or branched, saturated or unsaturated, alkyl group comprising from 1 to 7 carbon atoms, preferably from 1 to 5 carbon atoms, more preferably from 1 to 4 carbon atoms and/or dicarboxylic acid (b) may be chosen among the group consisting of the compounds having the formula HO(O)C-R'₂-C(O)OH wherein R'₂ represents a linear or branched, saturated or unsaturated, alkylene group comprising from 1 to 5 carbon atoms, preferably from 1 to 4 carbon atoms, more preferably from 1 to 2 carbon atoms or a covalent bond between the two carboxylic groups (-C(O)OH),
(c) at least one asphaltene inhibitor,
(d) at least one demulsifier.

According to this preferred embodiment, said fatty carboxylic acid (a) and mono- or polycarboxylic acid (b) are preferably in a ratio by mass (a):(b) ranging from 60:40 to 90: 10, more preferably from 70:30 to 85:15, even more preferably is in a ratio of 80:20.

Preferably, the composition according to the present invention comprises:
(a) at least one fatty carboxylic acid having the formula R₁-C(O)OH wherein R₁ denotes a hydrocarbon group containing from 12 to 24 carbon atoms, more preferably from 12 to 20 carbon atoms, even more preferably from 14 to 20 carbon atoms,
(b) at least one monocarboxylic acid having the formula R₂-C(O)OH wherein R₂ represents a linear or branched, saturated or unsaturated, alkyl group comprising from 1 to 7 carbon atoms, preferably from 1 to 5 carbon atoms, more preferably from 1 to 4 carbon atoms,
(c) at least one asphaltene inhibitor,
(d) at least one demulsifier.

According to this preferred embodiment, said fatty carboxylic acid (a) and monocarboxylic acid (b) are preferably in a ratio by mass (a):(b) ranging from 60:40 to 90:10, more preferably from 70:30 to 85:15, even more preferably is in a ratio of 80:20.

Preferably, the composition according to the present invention comprises:
(a) at least one fatty carboxylic acid having a fatty chain chosen in the group consisting of oleic acid, linoleic acid, arachidonic acid, isostearic acid, isopalmitic acid, and mixtures thereof, preferably oleic acid,
(b) at least one mono-or polycarboxylic acid chosen among the group consisting of propionic acid, acetic acid, propanedioic acid, pentanedioic acid, butanedioic acid, ethanedioic acid, or mixture thereof, especially chosen among the group consisting of propionic acid, acetic acid, or mixture thereof, specifically propionic acid,
(c) at least one asphaltene inhibitor,
(d) at least one demulsifier.

According to this preferred embodiment, said composition may comprise said mixture of carboxylic acids (a) + (b) and the asphaltene inhibitor (c) in a ratio by mass (a)+(b):(c) ranging from 50:50 to 90:10, even more preferably from 50:50 to 80:20, even more preferably is in a ratio of 80:20..

According to this preferred embodiment, said composition preferably comprises (a) at least one fatty carboxylic acid having a fatty chain chosen in the group consisting of oleic acid, linoleic acid, arachidonic acid, isostearic acid, isopalmitic acid, and mixtures thereof, preferably oleic acid, and (b) at least one monocarboxylic acid chosen from propionic acid, acetic acid, or mixture thereof, especially propionic acid.

### Use of said composition

As previously indicated, a subject-matter of the present invention relies on the use of said composition as an additive in a petroleum product emulsion, such as a crude oil emulsion and/or any emulsion product which results therefrom by any refining and/or extraction process.

Preferably, said composition is used as an additive in a petroleum product emulsion comprising one or more solid particles.

More preferably, said composition is used for treating a petroleum product emulsion comprising one or more solid particles.

According to a preferred embodiment, said composition is used for demulsifying water in a petroleum product emulsion comprising one or more solid particles and/or for decreasing viscosity of said petroleum product emulsion.

Advantageously, said composition is used for demulsifying water in a petroleum product emulsion comprising one or more solid particles.

Advantageously, said composition may also be used to decrease the viscosity of a petroleum product emulsion comprising one or more solid particles.

The petroleum product emulsion may be a crude oil emulsion and/or any emulsion product which derives therefrom by any refining and/or extraction process, preferably a crude oil emulsion.

The petroleum product may be a crude oil emulsion and/or any emulsion product which derives therefrom by any refining and/or extraction process, an emulsion of hydrocarbon fractions, emulsion of crude oils deriving from the distillation thereof, bitumen emulsions, and mixtures thereof.

The petroleum product emulsion may also be a bitumen emulsion, such as bitumens of natural origin such as those present in natural bitumen or natural asphalt deposits, or bituminous sands, the bitumens originating from the refining of crude oil, in particular from the atmospheric and/or vacuum distillation of oil, it being possible for these bitumens to optionally be blown, visbroken and/or deasphalted and/or mixed.

The petroleum product emulsion, especially a crude oil emulsion and/or any emulsion product which derives therefrom by any refining and/or extraction process, may be a water-in-oil emulsion or an oil-in-water emulsion, especially a water-in-oil emulsion.

The solid particles may be chosen from organic and/or mineral particles, especially chosen from asphaltene, organic acids, calcium carbonates, silica and/or clay, specifically chosen from asphaltene and/or calcium carbonates.

According to a preferred embodiment, the solid particles are chosen from organic particles.

According to another preferred embodiment, the solid particles are chosen from mineral particles, especially from calcium carbonates.

According to another preferred embodiment, the solid particles are chosen from organic and mineral particles, preferably from asphaltene and calcium carbonates.

Preferably, said crude oil emulsion or any emulsion product which derives therefrom by any refining and/or extraction process is a water-in-oil emulsion comprising one or more solid particles, especially chosen from organic and/or mineral particles.

According to a preferred embodiment, said composition is used for treating a crude oil emulsion and/or any emulsion product which derives therefrom by any refining and/or extraction process that comprise one or more solid particles, especially chosen from organic and/or mineral particles, preferably chosen from asphaltene, organic acids, calcium carbonates, silica and/or clay.

Preferably, said composition is used for treating a crude oil emulsion and/or any emulsion product which derives therefrom by any refining and/or extraction process that comprise one or more solid particles chosen from asphaltene and/or calcium carbonates.

According to a preferred embodiment, said composition is used for demulsifying water in a crude oil emulsion and/or any emulsion product which derives therefrom by any refining and/or extraction process that comprise one or more solid particles, especially chosen from organic and/or mineral particles, preferably chosen from asphaltene, organic acids, calcium carbonates, silica and/or clay.

Preferably, said composition is used for demulsifying water in a crude oil emulsion and/or any emulsion product which derives therefrom by any refining and/or extraction process that comprise one or more solid particles chosen from asphaltene and/or calcium carbonates.

According to a preferred embodiment, said composition is used to decrease the viscosity of a crude oil emulsion and/or any emulsion product which derives therefrom by any refining and/or extraction process that comprise one or more solid particles, especially chosen from organic and/or mineral particles, preferably chosen from asphaltene, organic acids, calcium carbonates, silica and/or clay.

Preferably, said composition is used to decrease the viscosity of a crude oil emulsion and/or any emulsion product which derives therefrom by any refining and/or extraction process that comprise one or more solid particles chosen from asphaltene and/or calcium carbonates, specifically from calcium carbonates.

According to a preferred embodiment, said composition is used as an additive in an oil installation.

According to a preferred embodiment, a composition (C1) comprising said mixture of carboxylic acids (a) + (b) and said at least one asphaltene inhibitor (c) is used to improve the demulsifying properties of at least one demulsifier as previously defined, especially in a petroleum product emulsion as previously defined.

Preferably, a composition (C1) comprising said mixture of carboxylic acids (a) + (b) and said at least one asphaltene inhibitor (c) is advantageously used for demulsifying water in petroleum product emulsion comprising one or more solid particles, such as organic and/or mineral particles, especially chosen from asphaltene and/or calcium carbonates.

Preferably, a composition (C1) comprising said mixture of carboxylic acids (a) + (b) and said at least one asphaltene inhibitor (c) is used for demulsifying water in crude oil emulsions comprising one or more solid particles, such as organic and/or mineral particles, especially chosen from asphaltene and/or calcium carbonates.

Preferably, a composition (C1) comprising said mixture of carboxylic acids (a) + (b) and said at least one asphaltene inhibitor (c) is used as an additive in a petroleum product emulsion comprising one or more solid particles, such as organic and/or mineral particles, and one or more demulsifiers as previously defined.

### Petroleum product

As previously outlined, another subject-matter of the present invention pertains to a petroleum product emulsion comprising:
(i) a crude oil emulsion and/or any emulsion product which results therefrom by any refining and/or extraction process, preferably a crude oil emulsion,
(ii) one or more solid particles, as previous defined,
(iii) an additive composition as described above,

The petroleum product emulsion comprises a crude oil emulsion and/or any emulsion product which derives therefrom by any refining and/or extraction process.

The petroleum product may also be a bitumen, such as bitumens of natural origin such as those present in natural bitumen or natural asphalt deposits, or bituminous sands, the bitumens originating from the refining of crude oil, in particular from the atmospheric and/or vacuum distillation of oil, it being possible for these bitumens to optionally be blown, visbroken and/or deasphalted and/or mixed.

The petroleum product can comprise a crude oil emulsion, emulsion of hydrocarbon fractions, emulsion of crude oils deriving from the distillation thereof such as in heavy fuel oils, heavy residues, and/or bitumen emulsions.

The petroleum product emulsion is preferably a crude oil emulsion.

The crude oil emulsion or any emulsion product which derives therefrom by any refining and/or extraction process may be a water-in-oil emulsion or an oil-in-water emulsion, especially a water-in-oil emulsion.

Preferably, the crude oil emulsion or any emulsion product which derives therefrom by any refining and/or extraction process is a water-in-oil emulsion.

The crude oil emulsion or any emulsion product which derives therefrom by any refining and/or extraction process comprises water preferably in a content ranging from 1 to 90% of water in volume related to the total volume of said petroleum product, even more preferably from 5 to 80% of water related to the total volume of said crude oil emulsion or any emulsion product.

The petroleum product preferably comprises from 1 to 90% of water in volume related to the total volume of said petroleum product, even more preferably from 5 to 80% of water related to the total volume of said petroleum product.

The petroleum product emulsion preferably comprises strictly less than 1% of water in volume.

The petroleum product advantageously contains at least one mixture of said carboxylic acids (a) and (b) at an amount ranging from 10 to 800 ppm by weight, preferably from 10 to 400 ppm, more preferably from 10 to 210 ppm and more preferably still from 10 to 100 ppm, with respect to the total weight of the petroleum product.

The petroleum product advantageously contains at least one asphaltene inhibitor at an amount ranging from 10 to 5000 ppm by weight, preferably from 10 to 1000 ppm by weight, with respect to the total weight of the petroleum product.

The petroleum product advantageously contains at least one demulsifier at an amount ranging from 10 to 5000 ppm by weight, preferably from 10 to 1000 ppm by weight, with respect to the total weight of the petroleum product emulsion.

The additive composition is advantageously present in an amount ranging from 10 to 1000 ppm by weight, preferably from 10 to 500 ppm, more preferably from 10 to 300 ppm and more preferably still from 10 to 150 ppm, expressed as total weight of said mixture of carboxylic acids (a) and (b) with respect to the total weight of the petroleum product emulsion.

Preferably, the solid particles may be chosen from organic and/or mineral particles.

Preferably, the solid particles may be chosen from organic particles.

Preferably, the solid particles may be chosen from mineral particles.

Preferably, the solid particles may be chosen from organic and mineral particles.

Preferably, the solid particles may be chosen from asphaltene and/or calcium carbonates, especially from asphaltene and calcium carbonates.

### Method

Another subject-matter of the present invention is a method for treating a petroleum product emulsion as previously defined, preferably a crude oil emulsion, including one or more solid particles, as previously defined, comprising adding said at least additive composition to said product.

Advantageously, said method is for demulsifying water in a petroleum product emulsion as previously defined, preferably a crude oil emulsion and/or any emulsion product which derives therefrom by any refining and/or extraction process, comprising one or more solid particles, as previously defined, involving adding said at least additive composition to said product.

Preferably, said method is for demulsifying water in a crude oil emulsion, particularly in a water-in-oil emulsion or an oil-in-water emulsion, comprising one or more solid particles, as previously defined.

Advantageously, said method is for decreasing the viscosity of a petroleum product emulsion as previously defined, preferably a crude oil emulsion, comprising one or more solid particles, as previously defined, involving adding said at least additive composition to said product.

Preferably, said method is for decreasing the viscosity a crude oil emulsion, especially a water-in-oil emulsion or an oil-in-water emulsion, comprising one or more solid particles, as previously defined, involving adding said at least additive composition to said product.

Advantageously, said method is for reducing the content of one or more solid particles contained in a petroleum product emulsion, especially a crude emulsion and/or any emulsion product deriving therefrom by any refining and/or extraction process, comprising said one or more solid particles as previously defined.

Preferably, said method is for reducing the content of one or more solid particles contained in a crude emulsion especially a water-in-oil emulsion or an oil-in-water emulsion, comprising said one or more solid particles, as previously defined, involving adding said at least additive composition to said product.

According to a preferred embodiment, the additive composition is preferably added in an amount ranging from 10 to 1000 ppm by weight, preferably from 10 to 250 ppm and more preferably still from 10 to 125 ppm, with respect to the total weight of the petroleum product.

The method may be implemented at temperatures ranging from 10 to 100°C preferably ranging from 20 to 60°C.

Preferably, the method according to the invention comprises adding at least said additive composition to said product and separating the water phase from the oil phase in said product.

Preferably, the separation of the water phase and the oil phase after the implementation of said additive composition may be conducted via centrifugation, electrostatic field application, gravity, microwaves, hydrocyclones, and combination thereof.

According to a preferred embodiment, the method of the instant invention comprises at least two steps:
(1) the addition (or introduction) of said at least additive composition as previously defined into the petroleum product,
(2) a treatment step chosen from: a rise in pressure, a rise in temperature and a mixing with at least one other fluid.

According to a most preferred embodiment, steps (1) and (2) are carried out successively (step 1 and then step 2).

According to a preferred variant, step (2) is chosen from: an extraction of a crude oil from a reservoir, a stage of refining a crude oil or a derived product, a transportation of a crude oil or of a derived product, a filtration of a crude oil or of a derived product, an injection of gas into a crude oil or into a derived product, a mixing of crude oils or of derived products, and a mixing of a crude oil or of a derived product with a solvent.

Step (2) can for example correspond to a pressurization, for example in a pipeline or any type of pipe, or through a filter; it can comprise a heating in a refining plant, an injection of a gas or a mixing with another variety of crude oil or with another grade of heavy oil resulting from the refining.

According to a preferred embodiment, said method comprises adding to said petroleum product at least one demulsifier (d) as previously defined and a least one composition (C1) as previously defined.

According to this preferred embodiment, the at least one demulsifier (d) may be added to the petroleum product sequentially, especially before and/or after, or simultaneously with the said at least composition (C1).

According to this preferred embodiment, the at least one demulsifier (d) is advantageously added sequentially to said composition (C1), more preferentially before or after composition (C1).

In other words, according to an embodiment, said method comprises adding to the petroleum product:
- at least one demulsifier (d),
- at least one composition (C1) as previously defined,
the at least one demulsifier (d) may be added to said product sequentially, especially before and/or after, or simultaneously with the additive composition, preferentially sequentially.

According to this preferred embodiment, the at least one demulsifier is added to the petroleum product in an amount ranging from 10 to 1000 ppm, preferably from 10 to 500 ppm, more preferably still from 10 to 200 ppm, with respect to the total weight of the petroleum product.

According to this preferred embodiment, said composition (C1) is added to the petroleum product in an amount ranging from 10 to 1000 ppm, preferably from 10 to 500 ppm, more preferably still from 10 to 200 ppm, with respect to the total weight of the petroleum product.

The examples hereafter only aim at illustrating the present invention and shall not be interpreted so as to limit its scope.

### EXAMPLES

### Example 1:

### Preparation of an additive composition

An additive composition (A1) according to the present invention is prepared by mixing:
- (a) an oleic acid and (b) a propionic acid in a weight ratio (a)/(b) of 80/20, (37,5 %) - 75 ppm
- (c) an asphaltene inhibitor corresponding to an alkylphenol formaldehyde resin according to the patent application WO2016/162392 in an amount of (12,5%) - 25 ppm,
- (d) a demulsifier corresponding to a blend of alkoxylated alkylphenol resins, alkoxylated amine, EO/PO copolymers in an aromatic solvent (40% active content), in an amount of 50 % (100 ppm)

The additive composition (A1) exhibits a good ecotoxicity profile ensuring safety conditions for the environment.

### Preparation of a water-in-crude oil emulsion

A water-in-crude oil emulsion (E), at a water/oil ratio (W/O) of 25/85 (v/v) is prepared by addition of water and mixing.

Mixing was conducted at 60°C °C and at a speed rate 1500 rpm during 5 minutes (time required to disperse all the water into the oil mixture). Water was added to the oil mixture in aliquots spread over several additions to obtain a water/oil ratio of 25/85 (v/v).

The characteristics of the Crude oil are as follows:
- Density at 15°C = 0.9439 g/cm3
- Viscosity at 40°C = 600 mPa.s
- Wax Appearance Temperature (DSC): 30,1°C
- Wax content by DSC: 6,6 % m/m
- Saturate/Aromatics/Resins/Asphaltene(%m/m) : 18,5/ 50,6/ 10,54/20,37

### Protocol for assessing demulsification properties:

In a first centrifugation tube (T1), the water-in-crude emulsion (E) was introduced. No additives were further made.

In a second centrifugation tube (T2), the water-in-crude emulsion (E) was introduced followed by the addition of the demulsifier as used for composition (A1). The demulsifier was added to the emulsion (E) to an amount of 200 ppm.

In a third centrifugation tube (T3), the water-in-crude emulsion (E) was introduced followed by the addition of composition (A1) to an amount of 200 ppm.

After preparation, the tubes T1, T2 and T3 were placed in a heating bath at 80°C and were observed for phase separation and measurements of water phases were carried out over a period of 20 minutes. The quality of water and quality of interface is also observed. The results are described in Figure 1.

### Results

Figure 1 shows the quantity of water separated from each emulsion as a function of time over a period of 20 minutes in tubes T1, T2 and T3. The aim is to assess the separation rate of the aqueous phase from the tested emulsions in tubes T1, T2 and T3.

In Figure 1:
- the quantity of water separated from emulsion (E) devoid of additives is denoted T1,
- the quantity of water separated from emulsion (E) comprising the demulsifier is denoted T2,
- the quantity of water separated from emulsion (E) comprising additive composition (A1) is denoted T3.

As depicted in Figure 1, in the first tube T1, after 10 minutes, we observed that less than 1 ml of water was separated from the emulsion. After 15 minutes, the quantity of water that had separated from the emulsion reached a maximum of 5 ml. Hence, the amount of water discharged from the emulsion peaked at 5 ml in T1.

As displayed by Figure 1, the second tube T2, after 10 minutes, we observed that approximately 4.5 ml of water was separated from the emulsion. After 12 minutes, we observed that approximately 14 ml of water was separated from the emulsion. After 15 minutes, we observed that approximately 17 ml of water was separated from the emulsion. After 20 minutes, we observed that 25 ml of water was separated from the emulsion.

In the third tube T3, after 10 minutes, we observed that approximately 8 ml of water was separated from the emulsion. After 12 minutes, we observed that approximately 20 ml of water was separated from the emulsion. After 15 minutes, we observed that more than 20 ml of water was separated from the emulsion. After 20 minutes, we observed that 25 ml of water was separated from the emulsion.

It resulted from this experiment, that the use of composition (A1) in tube T3 leads to faster kinetics of separation phase than a demulsifier used alone in tube T2 or when no additives were used in tube T1.

The content of calcium carbonate is also strongly reduced with the implementation of composition (A1) in comparison with the use of the demulsifier alone.

Furthermore, we observed that the use of composition (A1) improves the water quality, enhances the water-oil interface of the emulsion and reduces the viscosity of the emulsion.

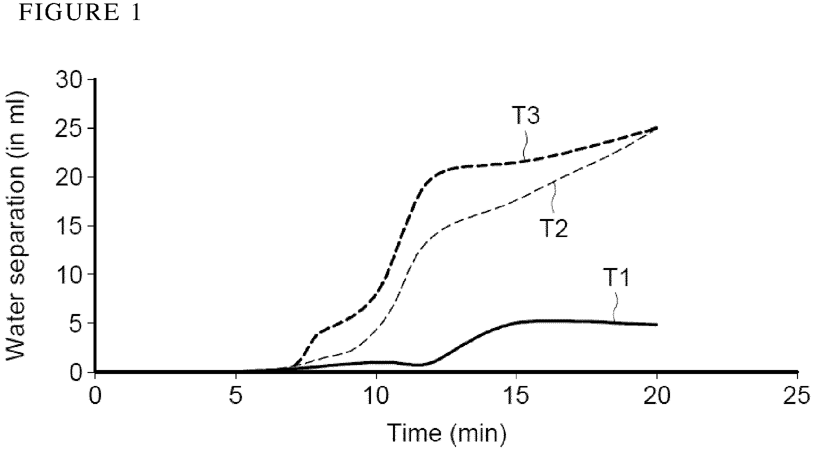

## Claims

1. An oil soluble additive composition comprising:
(a) at least one fatty carboxylic acid comprising at least one fatty chain containing at least 8 carbon atoms,
(b) at least one mono- or polycarboxylic acid, in particular at least one monocarboxylic acid, comprising at least one hydrocarbon chain containing from 1 to 7 carbon atoms,
(c) at least one asphaltene inhibitor, and
(d) at least one demulsifier.

2. The composition as defined in the preceding claim, wherein said fatty carboxylic acid has a fatty chain comprising from 8 to 30 carbon atoms, preferably from 12 to 24 carbon atoms, more preferably from 12 to 20 carbon atoms, and even more preferably from 14 to 20 carbon atoms.

3. The composition according to Claim 1 or 2, wherein said fatty carboxylic acid is a bio-based compound, preferably a vegetable-based compound.

4. The composition according to any of the preceding claims, wherein said fatty carboxylic acid is chosen among the group consisting of oleic acid, linoleic acid, arachidonic acid, isostearic acid, isopalmitic acid, ricinoleic acid and mixtures thereof, preferably oleic acid, ricinoleic acid and mixtures thereof.

5. The composition according to any of the preceding claims, wherein said mono- or polycarboxylic acid is chosen among the group consisting of propionic acid, acetic acid, propanedioic acid, pentanedioic acid, butanedioic acid, ethanedioic acid, or mixture thereof, especially chosen among the group consisting of monocarboxylic acid, and more preferably from propionic acid, acetic acid, or mixture thereof, specifically propionic acid.

6. The composition according to any of the preceding claims, wherein said fatty carboxylic acid (a) and mono-or polycarboxylic acid (b) are present in a ratio by mass (a):(b) ranging from more than 50:50 to 95:5, preferably from 60:40 to 90:10, more preferably from 70:30 to 85:15, even more preferably is in a ratio of 80:20.

7. The composition according to any of the preceding claims, wherein said asphaltene inhibitor (c) may be chosen from the group consisting of alkylphenol formaldehyde resins, modified alkylphenol aldehyde resins and mixtures thereof.

8. The composition according to any of the preceding claims, wherein said mixture of carboxylic acids (a) + (b) and the asphaltene inhibitor (c) are present in a ratio by mass (a)+(b):(c) ranging from 50:50 to 95:5, more preferably from 50:50 to 90:10, even more preferably from 50:50 to 80:20.

9. The composition according to any of the preceding claims, wherein said demulsifier (d) and said mixture of carboxylic acids (a) + (b) and the asphaltene inhibitor (c) are present in a ratio by masse (d): (a)+(b)+(c) ranging from 10:90 to 90:10, in particular from 20:80 to 80:20.

10. The composition according to any of the preceding claims, wherein it further comprises one or more liquid organic solvent(s) chosen in the group consisting of:
- poly alkyl ethers, aliphatic hydrocarbons such as alkanes, aromatic solvents such as aromatic hydrocarbons and aromatic hetero-compounds;
- organic solvents derived from biomass, in particular oils of vegetable origin and more preferably cashew nutshell liquid;
- and mixtures thereof

11. Use of a composition as defined in any claims 1 to 10 as an additive in a petroleum product emulsion, preferably a petroleum product emulsion comprising one or more solid particles, especially chosen from organic and/or mineral particles.

12. Use according to claim 11 for treating a petroleum product emulsion comprising one or more solid particles, especially chosen from organic and/or mineral particles.

13. Use according to claim 11 or 12 for demulsifying water in a petroleum product emulsion comprising one or more solid particles.

14. Use according to any of claims 11 to 13 for decreasing the viscosity of a petroleum product emulsion comprising one or more solid particles, especially chosen from organic and/or mineral particles.

15. A petroleum product emulsion comprising:
(i) a crude oil emulsion and/or any emulsion product which results therefrom by any refining and/or extraction process, and/or at least an emulsion of hydrocarbon fractions, emulsion of crude oils deriving from the distillation thereof, and/or bitumen emulsions,
(ii) one or more solid particles, especially chosen from organic and/or mineral particles, preferably chosen from asphaltene, organic acids, calcium carbonates, silica and/or clay,
(iii) an additive composition as described in any of claims 1 to 10.

16. Method for treating a petroleum product emulsion as defined in claim 15, preferably a crude oil emulsion, including one or more solid particles, as defined in claim 15, comprising adding at least the additive composition, as defined in any of claims 1 to 10, to said petroleum product.

17. Method according to claim 16, for demulsifying water in a petroleum product emulsion as defined in claim 15 and/or for decreasing the viscosity of a petroleum product emulsion as defined in claim 15, comprising adding at least the additive composition, as defined in any of claims 1 to 10, to said petroleum product.

18. Method according to claim 16 or 17 for reducing the content of one or more solid particles contained in the petroleum product as defined in claim 15.

19. Use of a composition (C1) comprising:
(a) at least one fatty carboxylic acid comprising at least one fatty chain containing at least 8 carbon atoms, as defined in any of claims 1 to 4 and 6,
(b) at least one mono- or polycarboxylic acid comprising at least one hydrocarbon chain containing from 1 to 7 carbon atoms, as defined in claim 1 or 5,
(c) at least one asphaltene inhibitor as defined in claim 1, 7 or 8,
to improve the demulsifying properties of at least one demulsifier.

20. The use according to claim 19 to improve the demulsifying properties of at least one demulsifier in a petroleum product emulsion, in particular comprising one or more solid particles, especially chosen from organic and/or mineral particles.
